# EUROPÄISCHE PATENTSCHRIFT

(11) **EP 3 685 038 B1**
(45) Veröffentlichungstag und Bekanntmachung des Hinweises auf die Patenterteilung: **17.11.2021**
(21) Anmeldenummer: 18766180.6
(22) Anmeldetag: 04.09.2018
(51) Int. Cl.: F03D 80/70, F03D 15/00, F16D 1/00, F16C 19/38, F16C 23/08, F16D 3/68

(54) **HAUPTLAGEREINHEIT FÜR DIE ROTORWELLE EINER WINDKRAFTANLAGE UND WINDKRAFTANLAGE**
MAIN BEARING UNIT FOR THE ROTOR SHAFT OF A WIND TURBINE, AND WIND TURBINE
UNITÉ DE PALIER PRINCIPAL POUR L'ARBRE DE ROTOR D'UNE ÉOLIENNE ET ÉOLIENNE

(30) Priorität: 21.09.2017 DE 102017008878
(43) Veröffentlichungstag der Anmeldung: 29.07.2020
(73) Patentinhaber: IMO Holding GmbH, 91350 Gremsdorf (DE)
(72) Erfinder: FRANK, Hubertus, 91315 Hoechstadt (DE); RUSS, Erich, 91350 Gremsdorf (DE)
(74) Vertreter: Schmidt, Steffen J.
(86) Internationale Anmeldenummer: PCT/EP2018/073738
(87) Internationale Veröffentlichungsnummer: WO 2019/057485

(56) Entgegenhaltungen:
- EP-A1- 2 573 386
- EP-A2- 1 867 871
- EP-B1- 2 573 386
- WO-A1-2012/052022
- GB-A- 2 496 256

## Beschreibung

### Hintergrund

Die vorliegende Offenbarung betrifft eine Hauptlagereinheit zur Lagerung der Rotorwelle einer Windkraftanlage. Ferner betrifft die Offenbarung eine Windkraftanlage, umfassend eine solche Hauptlagereinheit.

In Windkraftanlagen sind die Rotorblätter typischerweise mit einer Rotorwelle verbunden, um eine mittels Windkraft erzeugte Rotationsbewegung an eine Generatoreinheit zu übertragen. Zwischen der Rotorwelle und der Generatoreinheit können bekannte weitere Einheiten positioniert sein, wie beispielsweise ein Getriebe oder eine Bremse.

### Stand der Technik

Zur drehbaren Lagerung der Rotorwelle sind sogenannte Hauptlagereinheiten vorgesehen, die innerhalb einer Nacelle oder einer Gondel der Windkraftanlage angeordnet sind. In getriebelosen Windkraftanlagen umfasst die Hauptlagereinheit typischerweise lediglich eine Lagerstelle, die zum Erzielen einer kompakten Gestaltung nahe oder direkt in dem Bereich der Generatoreinheit angeordnet sein kann. Ist ein Getriebe vorgesehen, werden oftmals Fest-Loslagerkombinationen als Hauptlagereinheit verwendet, welche die Rotorwelle an zwei Lagerstellen lagern. Beispiele aus dem Stand der Technik werden in WO2012/052022A1 und EP1867871A2 offenbart.

### Problem

Beim Betrieb der Windkraftanlage können lastabhängige Durchbiegungen der Rotorwelle auftreten, die ein zuverlässiges Koppeln mit der Generatoreinheit erschweren. Dies gilt insbesondere dann, wenn die Hauptlagereinheit eine Fest-Loslagerkombination umfasst. Bisherige Ansätze, um derartige Probleme auszugleichen, zeichnen sich jedoch durch eine nachteilig hohe Baugröße aus.

Die vorliegende Offenbarung stellt sich demnach die Aufgabe, eine kompakte Lösung zur Lagerung der Rotorwelle bereitzustellen, die ein zuverlässiges Koppeln der Rotorwelle mit der Generatoreinheit ermöglicht.

### Vorgeschlagene Lösung

Zur Lösung dieser Aufgabe wird eine Hauptlagereinheit zur Lagerung der Rotorwelle einer Windkraftanlage gemäß Anspruch 1 vorgeschlagen. Die Hauptlagereinheit umfasst ein Wälzlager mit einem Innenring, einem Außenring und einer zwischen dem Außen- und Innenring aufgenommenen Wälzkörperanordnung. Ferner umfasst die Hauptlagereinheit eine Kupplungsanordnung, die dazu ausgebildet, die Rotorwelle zumindest mittelbar sowie drehmomentübertragend mit einer Abtriebswelle der Windkraftanlage zu koppeln. Dabei sind die Rotorwelle und die Kupplungsanordnung drehmomentübertragend entweder mit dem Außenring oder dem Innenring gekoppelt.

### Eigenschaften, Vorteile und Varianten

Die hier offenbarte und beanspruchte Hauptlagereinheit ermöglicht eine Reduzierung der Baugröße des Antriebsstrangs der Windkraftanlage, da die Kupplungsanordnung, welche gemäß nachstehenden Ausführungen insbesondere einen Versatz- und Durchbiegungsausgleich ermöglichen kann, unmittelbar mit einem Ringelement (Innenring oder Außenring) der Hauptlagereinheit gekoppelt ist. Dies kann auch ein direktes Befestigen an dem Ringelement umfassen, zum Beispiel über Bolzen und/oder Verschraubungen. Ebenso kann aber ein einteiliges Ausbilden von zumindest einem Teil der Kupplungsanordnung (zum Beispiel einem nachstehend erläuterten ersten Kupplungselement) und dem Innenring vorgesehen sein.

Im gleichen Sinne kann auch die Rotorwelle direkt mit dem Außenring oder Innenring gekoppelt und insbesondere daran befestigt sein, zum Beispiel über eine Bolzenverbindung. In einer weiteren Variante ist ein mittelbares Koppeln über Zwischenelemente realisiert.

Die Baugröße der Hauptlagereinheit und/oder des Antriebsstrangs der Windkraftanlage kann insbesondere eine axiale Baugröße entlang der Rotationsachse der Rotorwelle betreffen, wobei diese axiale Baugröße über ein Koppeln von Rotorwelle und Kupplungsanordnung mit demselben Ringelement (Innenring oder Außenring) der Hauptlagereinheit reduziert werden kann. Dies gilt insbesondere im Vergleich zu existierenden Lösungen, bei denen Kupplungen im Bereich von Getriebeeinheit angeordnet oder in diese integriert sind. Das mittelbare und drehmomentübertragende Koppeln mit der Abtriebswelle kann einschließen, dass die Kupplungsanordnung ein entsprechendes Drehmoment direkt an die Abtriebswelle oder an etwaige Zwischenwellen, Getriebeeinheiten oder dergleichen überträgt, welche wiederum mit der Abtriebswelle (zum Beispiel in Form einer Generatoreingangswelle) verbunden sind.

Die Wälzkörperanordnung kann einreihig oder mehrreihig ausgebildet sein, insbesondere zwei- oder dreireihig. Die Wälzkörper können dabei reihenförmig angeordnet sein, wobei jede Wälzkörperreihe typischerweise entlang einer zugeordneten Laufbahn ausgerichtet und bewegbar ist. Die Wälzkörper können Kugeln, Zylinder, Rollen, Nadeln oder Kegel umfassen. Das Wälzlager kann zum Beispiel als ein dreireihiges Rollen-, ein dreireihiges Kegelrollen-, ein dreireihiges Schrägrollenlager oder eine vorzugsweise mehrreihige Axial-Radial-Kombination ausgebildet sein.

In einer Variante ist die Rotorwelle mit dem Innenring gekoppelt. Hierfür können ein Flanschabschnitt der Rotorwelle und der Innenring miteinander fluchtende Durchgangsbohrungen umfassen, in die ein Verbindungsbolzen einsetzbar ist.

Gemäß einer Ausführungsform ist die Kupplungsanordnung dazu ausgebildet, einen Versatz zwischen der Rotorwelle und/oder der Hauptlagereinheit und der mit der Kupplungsanordnung gekoppelten Abtriebswelle zumindest teilweise auszugleichen. Bei der Abtriebswelle kann es sich um eine Getriebeeingangswelle, eine Zwischenwelle oder unmittelbar um eine Generatoreingangswelle handeln. Der Versatz kann einen Axialversatz betreffen, zum Beispiel zwischen den Rotationsachsen der über die Kupplungsanordnung verbundenen Wellen. Zusätzlich oder alternativ kann der Versatz einen Winkelversatz betreffen, der sich wiederum auf die Rotationsachsen der über die Kupplungsanordnung verbundenen Wellen beziehen kann.

Zum Versatzausgleich kann die Kupplungsanordnung wenigstens ein elastisches Element umfassen. Das elastische Element kann aus einem elastisch deformierbaren Material hergestellt sein oder ein solches Material umfassen. Das Material kann ein Elastomer oder ein Kunststoff wie zum Beispiel Polyamid sein. In einer weiteren Variante sind ein faserverstärkter und/oder ein hochfester sowie abriebarmer Kunststoff realisiert. Das elastische Material kann derart angeordnet sein, dass es verschleißbedingt leicht austauschbar ist, insbesondere ohne eine umfassende Demontage der Windkraftanlage oder von deren Antriebsstrang. Dies kann zum Beispiel dadurch erreicht werden, dass das elastische Element mehrteilig und/oder segmentartig ausgebildet und zwischen nachstehend erläuterten Kupplungselementen der Kupplungsanordnung einlegbar ist. Auch das gemäß einer Ausführungsform realisierte Anordnen von elastischen Elementen an Verbindungsbolzen ermöglicht einen einfachen Austausch.

In einer Variante umfasst die Kupplungsanordnung ein erstes Kupplungselement, das mit dem entsprechenden Element von Außenring und Innenring gekoppelt ist, und ein zweites Kupplungselement, das zumindest mittelbar mit der Abtriebswelle gekoppelt ist. Das Koppeln des ersten Kupplungselements mit dem Außen- oder Innenring kann auch ein zumindest teilweises einstückiges Ausbilden von Kupplungselement und dem entsprechenden Ring umfassen. Das zweite Kupplungselement kann einen Flansch oder eine andere geeignete Struktur umfassen, um einen Verbindungsbolzen aufzunehmen. Dieser kann wiederum in einem Flanschabschnitt der Abtreibswelle aufnehmbar sein.

In einer Variante erfolgt eine Drehmomentübertragung zwischen dem ersten und dem zweiten Kupplungselement zumindest teilweise über das elastische Element. Anders ausgedrückt kann der Kraft- und/oder Drehmomentfluss zwischen den Kupplungselementen über oder durch das elastische Element erfolgen. Dies kann daraufhin entsprechend deformiert werden, insbesondere um den gewünschten Versatzausgleich bereitzustellen.

Eine Ausführungsform sieht vor, dass das erste und zweite Kupplungselement jeweils eine Verzahnung umfassen und wobei die Verzahnungen der Kupplungselemente drehmomentübertragend miteinander wechselwirken. Die Verzahnung des ersten Kupplungselements kann zum Beispiel als Innenverzahnung und/oder an einem Innenumfangsbereich dieses Kupplungselements ausgebildet sein, wohingegen die Verzahnung des zweiten Kupplungselements als eine Außenverzahnung und/oder an einer Außenumfangsfläche dieses Kupplungselements ausgebildet sein kann. Die Verzahnungen können miteinander drehmomentübertragend in Eingriff stehen oder sich zumindest mittelbar drehmomentübertragend aneinander abstützen. Als Verzahnung kann prinzipiell jegliche geeignete Eingriffsstruktur verwendet werden, vorzugsweise aber eine regelmäßige Anordnung aus vorsprungartigen Zähnen und dazwischen positionierten Vertiefungen.

In einer Variante ist Verzahnung des zweiten Kupplungselements als Bogenverzahnung ausgebildet. Prinzipiell ist auch denkbar, dass die Verzahnung des zweiten Kupplungselements als Bogenverzahnung ausgebildet ist und/oder dass beide Kupplungselemente eine entsprechende Bogenverzahnung umfassen.

Eine Ausführungsform sieht vor, dass das elastische Element zumindest teilweise zwischen den Verzahnungen angeordnet ist. Beispielsweise kann das elastische Element ringförmig ausgebildet sein und radial zwischen den Kupplungselementen positioniert sein. Zusätzlich oder alternativ kann das elastische Element in einem Eingriffsbereich zwischen den Verzahnungen angeordnet sein, sodass die Verzahnungen nicht direkt oder nur in einem vorbestimmten Ausmaß in Kontakt treten. Über eine Kompression des elastischen Elements zwischen den Verzahnungen kann daraufhin ein Versatzausgleich zwischen den Kupplungselementen erreicht werden. Bei dieser Variante kann das elastische Element geeignet profiliert sein, um mit den Verzahnungen zu wechselwirken. Zum Beispiel kann es eine korrespondierend geformte Eingriffsstruktur und insbesondere eine Verzahnung umfassen, die vorzugsweise mit beiden der Kupplungselemente bzw. deren Verzahnungen in Eingriff bringbar ist. Weiterhin kann das elastische Element mehrteilig und/oder segmentartig ausgebildet sein, wobei die einzelnen Segmente gemäß den vorstehenden Varianten ausgebildet und angeordnet sein können.

Gemäß einer Weiterbildung sind das erste und zweite Kupplungselement über wenigstens einen Bolzen drehmomentübertragend miteinander gekoppelt. Beispielsweise können die Kupplungselemente jeweils einen Flansch und/oder einen Ringbereich umfassen, die jeweils miteinander fluchtende Durchgangsbohrungen aufweisen. In diese Bohrungen kann der Bolzen eingesetzt werden und die Kupplungselemente somit drehmomentübertragend aneinander befestigen.

In einer Variante ist das elastische Element an dem Bolzen angeordnet, beispielsweise in Form einer elastischen Ummantelung. Das elastische Element kann (insbesondere in Form einer Ummantelung) an einem Bolzenabschnitt angeordnet sein, der mit wenigstens einem der Kupplungselemente gekoppelt ist oder in Eingriff steht. Dies kann zum Beispiel einen freien Endbereich des Bolzenschafts betreffen. Die Ummantelung kann zum Beispiel ca. die Hälfte der Bolzenlänge einnehmen. Alternativ oder zusätzlich kann ein elastisches Element zwischen dem Bolzen und einer den Bolzen aufnehmenden Bohrung angeordnet sein, zum Beispiel in Form eines Einlegeelementes oder einer Innenwandbeschichtung der Bohrung. Erneut wird hierdurch ein Versatzausgleich ermöglicht, da wenigstens eines der Kupplungselemente in einem definierten Ausmaß relativ zu dem anderen bewegbar ist.

Die Offenbarung betrifft ferner eine Windkraftanlage, umfassend eine Hauptlagereinheit nach einem der vorangehenden Aspekte. Die Windkraftanlage kann eine Gondel oder Nacelle umfassen, in der die Rotorwelle sowie die Hauptlagereinheit zumindest teilweise aufgenommen sind.

In einer Variante umfasst die Windkraftanlage die mit der Hauptlagereinheit gekoppelte Rotorwelle und eine Getriebeeinheit, die mit der Abtriebswelle gekoppelt oder koppelbar ist, wobei die Kupplungsanordnung dazu ausgebildet ist, die Rotorwelle und die Getriebeeinheit drehmomentübertragend zu koppeln. Die Abtriebswelle kann in diesem Fall eine Getriebeeingangswelle bilden.

Die vorstehend erläuterten Vorrichtungsdetails sind zwar im Zusammenhang dargestellt; es sei jedoch darauf hingewiesen, dass sie auch unabhängig voneinander sind und auch frei miteinander kombinierbar sind. Die in den Fig. gezeigten Verhältnisse der einzelnen Teile und Abschnitte hiervon zueinander und deren Abmessungen und Proportionen sind nicht einschränkend zu verstehen. Vielmehr können einzelne Abmessungen und Proportionen auch von den gezeigten abweichen.

### Kurzbeschreibung der Zeichnungen

Mögliche Ausführungen werden nun anhand der beigefügten schematischen Darstellungen näher erläutert.
Fig. 1 zeigt eine die Rotationsachse enthaltene Schnittansicht einer Hauptlagereinheit gemäß einer ersten Ausführungsform.
Fig. 2 zeigt eine Detailansicht der ersten Ausführungsform zum Erläutern eines elastischen Elements der Kupplungsanordnung.
Fig. 3 zeigt eine die Rotationsachse enthaltene Schnittansicht einer Hauptlagereinheit gemäß einer zweiten Ausführungsform.
Fig. 4 zeigt eine die Rotationsachse enthaltene Schnittansicht einer Hauptlagereinheit gemäß einer dritten Ausführungsform.

### Detaillierte Beschreibung der Zeichnungen

Die hier beschriebenen Vorrichtungsvarianten sowie deren Funktions- und Betriebsaspekte dienen lediglich dem besseren Verständnis ihrer Struktur, Funktionsweise und Eigenschaften; sie schränken die Offenbarung nicht etwa auf die gezeigten Ausführungsbeispiele ein. Die Figuren sind schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen. Dabei kann jede Funktionsweise, jedes Prinzip, jede technische Ausgestaltung und jedes Merkmal, welches/welche in den Figuren oder im Text offenbart ist/sind, mit allen Ansprüchen, jedem Merkmal im Text und in den anderen Figuren, anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen den beschriebenen Vorrichtungen zuzuordnen sind. Dabei sind auch Kombinationen zwischen allen einzelnen Ausführungen im Text, das heißt in jedem Abschnitt der Beschreibung, in den Ansprüchen und auch Kombinationen zwischen verschiedenen Varianten im Text, in den Ansprüchen und in den Figuren umfasst und können zum Gegenstand weiterer Ansprüche gemacht werden.

In den Figuren sind einander entsprechende oder funktionsähnliche Bauteile mit übereinstimmenden Bezugszeichen versehen. Die Vorrichtungen werden nun anhand von Ausführungsbeispielen beschrieben.

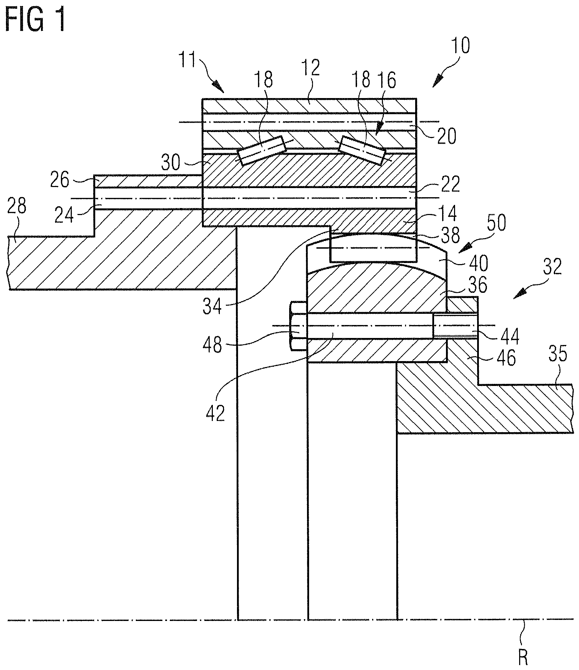

In Figur 1 ist eine Schnittansicht einer Hauptlagereinheit 10 einer Windkraftanlage gemäß einer ersten Ausführungsform gezeigt. Die Hauptlagereinheit 10 umfasst ein Wälzlager 11 mit einem Außenring 12 und einem Innenring 14. Zwischen den Ringen 12, 14 ist eine zweireihige Wälzkörperanordnung 16 angeordnet, die mehrere Wälzkörper 18 in Form von Schrägrollen umfasst. Der Außenring 12 umfasst eine Durchgangsbohrung 20, um den Außenring 12 an einem feststehenden Bereich einer Windkraftanlage zu befestigen. Der Innenring 14 umfasst ebenfalls eine Durchgangsbohrung 22. Diese Durchgangsbohrung 22 fluchtet mit einer korrespondierenden Durchgangsbohrung 24 in einem Flanschbereich 26 einer lediglich teilweise dargestellten Rotorwelle 28.

Die Rotorwelle 28 ist mit nicht näher dargestellten Rotorblättern der Windkraftanlage verbunden und rotiert gemeinsam mit diesen um eine Rotationsachse R. Über einen nicht dargestellten Bolzen, der in den Durchgangsbohrungen 24, 22 einsetzbar ist, ist die Rotorwelle 28 an dem Innenring 14 der Hauptlagereinheit 10 drehmomentübertragend befestigt. In Figur 1 erkennt man weiterhin, dass die Rotorwelle 28 und insbesondere deren Flanschbereich 26 dabei an einer ersten Stirnfläche 30 der Hauptlagereinheit 10 anliegt.

Die Hauptlagereinheit 10 umfasst ferner eine Kupplungsanordnung 32, die mit einer schematisch angedeuteten Abtriebswelle 35 gekoppelt ist. Die Abtriebswelle 35 ist im gezeigten Fall eine Getriebeeingangswelle, welche über ein nicht dargestelltes Getriebe wiederum drehmomentübertragend mit einer nicht gezeigten Generatoreingangswelle gekoppelt ist. Die Kupplungsanordnung 32 umfasst zwei Kupplungselemente 34, 36. Das erste Kupplungselement 34 ist dabei an dem Innenring 14 einstückig angeformt und somit drehmomentübertragend mit dem Innenring 14 gekoppelt. Ferner umfasst das erste Kupplungselement 34 eine Innenverzahnung 38, welche die Rotationsachse R rumläuft.

Das zweite Kupplungselement 36 ist hingegen ringförmig ausgebildet und weist an seiner Außenumfangsfläche eine Bogenverzahnung 40 auf. Die Bogenverzahnung 40 und Innenverzahnung 38 wirken drehmomentübertragend zusammen.

Schließlich umfasst das zweite Kupplungselement 36 wiederum eine Durchgangsbohrung 42, welche mit einer Durchgangsbohrung 44 in einem Flanschbereich 46 der Abtriebswelle 35 fluchtet. In die entsprechenden Durchgangsbohrungen 42,44 ist ein Verbindungsbolzen 48 eingesetzt, um die Abtriebswelle 35 und die Kupplungsanordnung 32 drehmomentübertragend miteinander zu koppeln.

Es versteht sich, dass eine beliebige Mehrzahl von sämtlichen der vorstehend erläuterten Durchgangsbohrungen 20, 24, 42, 44 samt darin eingesetzten Bolzen vorgesehen sein kann, um die entsprechenden Elemente sicher aneinander zu befestigen. Die Durchgangsbohrungen 20, 24, 42, 44 samt darin eingesetzten Bolzen können dabei gleichmäßig und/oder ringförmig in Umfangsrichtung verteilt sein.

Im Betrieb der Windkraftanlage ist eine Rotation der Rotorwelle 28 aufgrund der erläuterten Bolzenverbindung auf den Innenring 14 übertragbar, welcher gegenüber dem feststehenden Außenring 12 um die Rotationsachse R rotiert. Das erste Kupplungselement 34, das gemeinsam mit dem Innenring 14 rotiert, überträgt diese Rotation über die Verzahnungen 38, 40 auf das zweite Kupplungselement 36 und somit auf die Abtriebswelle 35.

Aus Figur 1 verdeutlicht sich bereits, dass das unmittelbare Anordnen der Kupplungsanordnung 32 an dem Wälzlager 11 und die sogar teilweise Integration in den Innenring 14 eine kompakte Gestaltung der Hauptlagereinheit 10 ermöglicht. Insbesondere die axiale Baugröße entlang der Rotationsachse R wird hierdurch verringert.

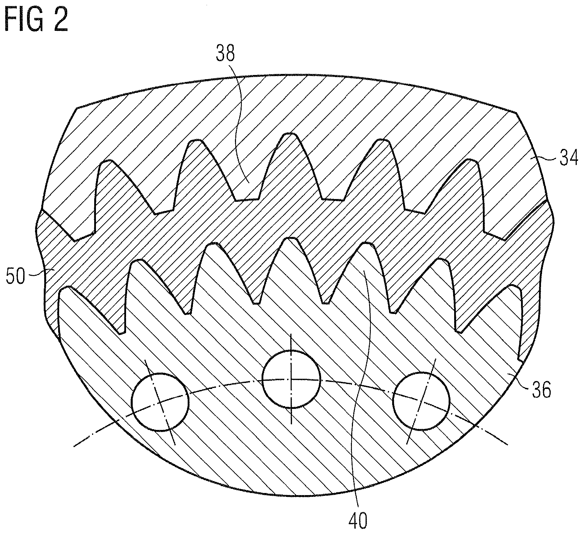

Die Kupplungsanordnung 32 zeichnet sich jedoch zusätzlich dadurch aus, dass sie ein elastisches Element 50 umfasst (sh. Fig. 2). Dieses ist zwischen den Verzahnungen derart eingelegt, dass eine Drehmomentübertragung zwischen den Kupplungselementen 34, 36 über dieses elastische Element 50 erfolgt.

Dies verdeutlicht sich aus der schematischen Detailansicht von Figur 2. Die Blickachse von Figur 2 entspricht dabei einer senkrechten Erstreckung der Rotationsachse R zur Blattebene. Man erkennt wiederum die Innenverzahnung 38 und die Bogenverzahnung 40 der beiden Kupplungselemente 34, 36. Diese stehen jedoch nicht unmittelbar in Kontakt oder in Eingriff miteinander, sondern jeweils lediglich in Eingriff mit dem ebenfalls verzahnt profiliertem elastischen Element 50.

Eine Rotation der Innenverzahnung 38 wird somit lediglich mittelbar über das elastische Element 50 auf die Bogenverzahnung 40 übertragen. Da das Element 50 jedoch elastisch ausgebildet ist, können Axialversätze oder Winkelfehler zwischen den Kupplungselementen 34, 36 dabei im Sinne eines Versatzausgleiches kompensiert werden. Das elastische Element 50 kann als geschlossener Ring ausgebildet sein oder aber mehrere separat handhabbare Segmente umfassen, die jeweils nur einen begrenzten Winkelbereich überspannen.

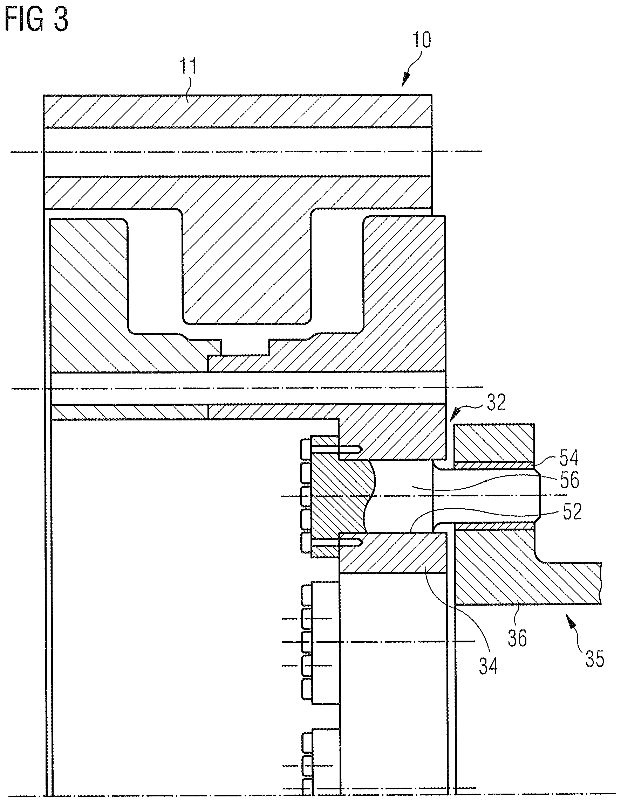

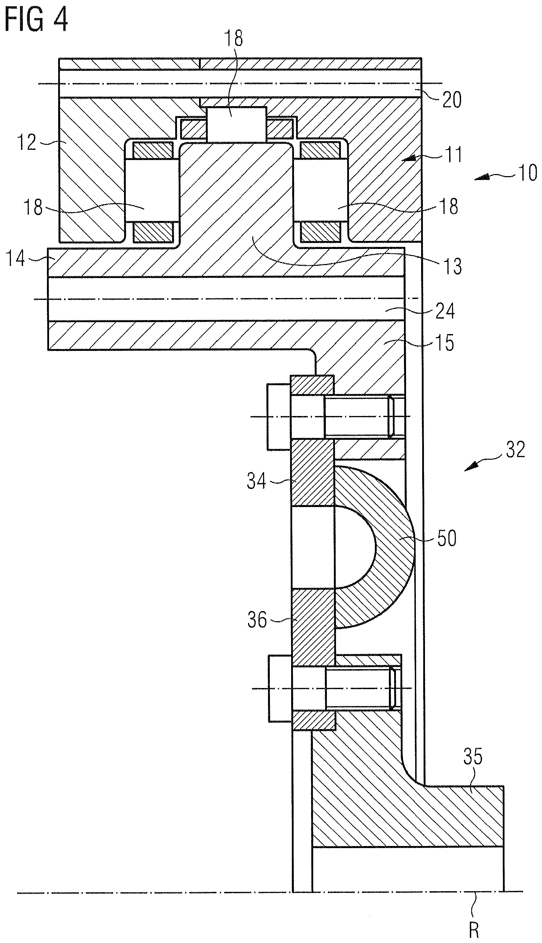

Im Folgenden werden weitere Ausführungsformen einer Hauptlagereinheit 10 unter Bezugnahme auf die Figuren 3 und 4 beschrieben. Gegenüber der ersten Ausführungsform gleichbleibende oder gleichwirkende Merkmale sind dabei mit gleichen Bezugszeichen versehen.

In Figur 3 ist eine Hauptlagereinheit 10 gemäß einer zweiten Ausführungsform lediglich schematisch angedeutet, ohne den inneren Aufbau des Wälzlagers 11 und die Anbindung an die nicht dargestellte Rotorwelle 28 noch einmal näher zu zeigen. Man erkennt jedoch wiederum das erste Kupplungselement 34, das erneut als ein flanschartiger Vorsprung einstückig mit dem nicht dargestellten Innenring 14 des Wälzlagers 11 ausgebildet ist.

Das erste Kupplungselement 34 umfasst eine Durchgangsbohrung 52, die mit einer Durchgangsbohrung 54 in einem zweiten Kupplungselement 36 fluchtet. Das zweite Kupplungselement 36 ist wiederum flanschartig und einstückig mit einer nicht näher dargestellten Abtriebswelle 35 ausgebildet. Zur Verbindung der Kupplungselemente 34, 36 ist ein Bolzen 56 vorgesehen. An seinem in die Durchgangsbohrung 54 des zweiten Kupplungselements 36 ragenden Ende ist der Bolzen 56 mit einem Elastomermaterial ummantelt, welches wiederum ein elastisches Element 50 der Kupplungsanordnung 32 bildet.

Im Rahmen der vorliegenden Offenbarung ist es prinzipiell auch denkbar, dass das elastische Element 50 separat von dem Bolzen 56 ausgebildet und beispielsweise als Einlegeteil in einer der Durchgangsbohrungen 52, 54 angeordnet ist. Ebenso kann das elastische Element 50 als eine Innenwandbeschichtung von zumindest einer der Durchgangsbohrung 52, 54 ausgebildet sein. Auch beliebige Kombinationen dieser Varianten sind denkbar. Ferner versteht es sich, dass prinzipiell eine beliebige Vielzahl von Bolzen 56 vorgesehen sein kann, um die Kupplungselemente 34, 36 sicher aneinander zu befestigen.

Über das elastische Element 50 wird wiederum ermöglicht, dass Axialversätze und Winkelfehler zwischen den Kupplungselementen 34, 36 und den damit jeweils gekoppelten weiteren Elementen ausgeglichen werden können.

Eine dritte Ausführungsform ist in Figur 4 gezeigt. In diesem Fall ist die Hauptlagereinheit 10 detaillierter gezeigt, sodass man einen zweigeteilten Außenring 12 sowie einen Innenring 14 mit umlaufender vorsprungartiger Nase 13 erkennt. Das Wälzlager 11 umfasst in diesem Fall eine dreireihige Anordnung von zylinderförmigen Wälzkörpern 18. Analog zur Ausführungsform aus Figur 1 weisen der Außenring 12 und der Innenring 14 wiederum Durchgangsbohrungen 20, 24 auf, wobei der Innenring 14 mittels der Durchgangsbohrung 24 mit einer nicht dargestellten Rotorwelle 28 drehmomentübertragend verbunden ist. Auch die Erstreckung der Rotationsachse R ist in Figur 4 analog zu Figur 1 markiert.

Erneut ist an dem Innenring 14 ein erstes ringförmiges Kupplungselement 34 befestigt. Genauer gesagt ist das ringförmige Kupplungselement 36 mittels einer Schraubverbindung an einem flanschartig vorspringenden Ringabschnitt 15 des Innenrings 14 befestigt. Ein zweites ringförmiges Kupplungselement 36 ist sozusagen radial innerhalb des Kupplungselements 36 angeordnet, da es einen geringeren Durchmesser aufweist. Das zweite Kupplungselement 36 ist über eine Schraubverbindung mit einer Abtriebswelle 35 verbunden.

Erneut versteht es sich, dass eine beliebige Vielzahl von Durchgangsbohrungen 20, 24 und Schraubverbindungen vorgesehen sein kann, um die relevanten Elemente sicher aneinander zu befestigen.

Die Kupplungsanordnung 32 umfasst im gezeigten Fall wiederum ein elastisches Element 50. Dieses ist als ein Zwischenring ausgebildet, der die Kupplungselemente 34, 36 drehmomentübertragend miteinander verbindet. Das elastische Element 50 kann dabei an den Kupplungselementen 34, 36 festgeklebt oder anderweitig befestigt sein. Erneut können über das im Kraft- und Drehmomentfluss angeordnete elastische Element 50 somit Versatz- und Winkelfehler zwischen den über die Kupplungsanordnung 32 gekoppelten Elementen ausgeglichen werden.

## Patentansprüche

1. Hauptlagereinheit (10) zur Lagerung der Rotorwelle (28) einer Windkraftanlage, umfassend:
- ein Wälzlager (11) mit mindestens einem Innenring (14), mindestens einem Außenring (12) und einer zwischen dem Außen- und Innenring (12, 14) aufgenommenen Wälzkörperanordnung;
- eine Kupplungsanordnung (32), die dazu ausgebildet, die Rotorwelle (28) zumindest mittelbar sowie drehmomentübertragend mit einer Abtriebswelle (35) der Windkraftanlage zu koppeln;
wobei die Rotorwelle (28) drehmomentübertragend mit einem von Außenring (12) und Innenring (14) gekoppelt ist; und
wobei die Kupplungsanordnung (32) drehmomentübertragend mit demselben von Außenring (12) und Innenring (14) gekoppelt ist wie die Rotorwelle (28),
**dadurch gekennzeichnet,**
**dass** die Kupplungsanordnung (32) unmittelbar mit dem einen von Außenring (12) und Innenring (14) gekoppelt ist oder in den einen von Außenring (12) und Innenring (14) integriert ist.

2. Hauptlagereinheit (10) nach Anspruch 1,
wobei die Rotorwelle (28) mit dem Innenring (14) gekoppelt ist.

3. Hauptlagereinheit (10) nach einem der vorangehenden Ansprüche,
wobei die Kupplungsanordnung (32) dazu ausgebildet, einen Versatz zwischen der Rotorwelle (28) und/oder der Hauptlagereinheit (10) und der mit der Kupplungsanordnung (32) gekoppelten Abtriebswelle (35) zumindest teilweise auszugleichen.

4. Hauptlagereinheit (10) nach Anspruch 3,
wobei die Kupplungsanordnung (32) zum Versatzausgleich wenigstens ein elastisches Element (50) umfasst.

5. Hauptlagereinheit (10) nach einem der vorangehenden Ansprüche,
wobei die Kupplungsanordnung (32) ein erstes Kupplungselement (34) umfasst, das mit dem entsprechenden Element von Außenring (12) und Innenring (14) gekoppelt ist, und ein zweites Kupplungselement (36), das zumindest mittelbar mit der Abtriebswelle (35) gekoppelt ist.

6. Hauptlagereinheit (10) nach Anspruch 4 und 5,
wobei eine Drehmomentübertragung zwischen dem ersten und dem zweiten Kupplungselement (34, 36) zumindest teilweise über das elastische Element (50) erfolgt.

7. Hauptlagereinheit (10) nach Anspruch 5 oder 6,
wobei das erste und zweite Kupplungselement (34, 36) jeweils eine Verzahnung (38, 40) umfassen und wobei die Verzahnungen (38, 40) der Kupplungselemente (34, 36) drehmomentübertragend miteinander wechselwirken.

8. Hauptlagereinheit (10) nach Anspruch 7,
wobei die Verzahnung (40) des zweiten Kupplungselements (36) als Bogenverzahnung ausgebildet ist.

9. Hauptlagereinheit (10) nach Anspruch 6 und einem der Ansprüche 7 oder 8,
wobei das elastische Element (50) zumindest teilweise zwischen den Verzahnungen (38, 40) angeordnet ist.

10. Hauptlagereinheit (10) nach Anspruch 5,
wobei das erste und zweite Kupplungselement (34, 36) über wenigstens einen Bolzen (56) drehmomentübertragend miteinander gekoppelt sind.

11. Hauptlagereinheit (10) nach den Ansprüchen 6 und 10,
wobei das elastische Element (50) an dem Bolzen (56) angeordnet ist, beispielsweise in Form einer elastischen Ummantelung.

12. Windkraftanlage,
umfassend eine Hauptlagereinheit (10) nach einem der vorangehenden Ansprüche.

13. Windkraftanlage nach Anspruch 12,
umfassend die mit der Hauptlagereinheit (10) gekoppelte Rotorwelle (28) und eine Getriebeeinheit, die mit der Abtriebswelle (35) gekoppelt oder koppelbar ist,
wobei die Kupplungsanordnung (32) der Hauptlagereinheit (10) dazu ausgebildet ist, die Rotorwelle (28) und die Getriebeeinheit mittels der Abtriebswelle (35) drehmomentübertragend zu koppeln.

## Claims

1. Main bearing unit (10) for supporting the rotor shaft (28) of a wind turbine, comprising:
- a roller bearing (11) having at least one inner ring (14), at least one outer ring (12) and a roller element assembly received between the outer and inner rings (12, 14);
- a coupling arrangement (32) which is designed to couple the rotor shaft (28) at least indirectly and in a torque-transmitting manner to an output shaft (35) of the wind turbine;
wherein the rotor shaft (28) is coupled in a torque transmitting manner to one of the outer ring (12) and the inner ring (14); and
wherein the coupling arrangement (32) is coupled in a torque transmitting manner to the same one of the outer ring (12) and the inner ring (14) as the rotor shaft (28), **characterized in that**
the clutch assembly (32) is directly coupled to the one of the outer ring (12) and the inner ring (14) or integrated into the one of the outer ring (12) and the inner ring (14).

2. The main bearing unit (10) according to claim 1,
wherein the rotor shaft (28) is coupled to the inner ring (14).

3. The main bearing unit (10) according to any of the preceding claims,
wherein the coupling arrangement (32) is adapted to at least partially compensate for an offset between the rotor shaft (28) and/or the main bearing unit (10) and the output shaft (35) coupled to the coupling arrangement (32).

4. The main bearing unit (10) according to claim 3,
wherein the coupling arrangement (32) comprises at least one elastic element (50) for compensating for misalignment.

5. The main bearing unit (10) according to any of the preceding claims,
wherein the clutch assembly (32) comprises a first clutch member (34) coupled to the corresponding one of the outer ring (12) and the inner ring (14), and a second clutch member (36) coupled at least indirectly to the output shaft (35).

6. The main bearing unit (10) according to claim 4 and 5,
wherein a torque transmission between the first and the second coupling element (34, 36) takes place at least partly via the elastic element (50).

7. The main bearing unit (10) according to claim 5 or 6,
wherein the first and second coupling elements (34, 36) each comprise a toothing (38, 40) and wherein the toothings (38, 40) of the coupling elements (34, 36) interact with each other in a torque-transmitting manner.

8. The main bearing unit (10) according to claim 7,
wherein the toothing (40) of the second coupling element (36) is designed as curved toothing.

9. The main bearing unit (10) according to claim 6 and any of claims 7 or 8,
wherein the resilient element (50) is at least partially arranged between the teeth (38, 40).

10. The main bearing unit (10) according to claim 5,
wherein the first and second coupling elements (34, 36) are coupled to each other via at least one pin (56) in a torque-transmitting manner.

11. The main bearing unit (10) according to claims 6 and 10,
wherein the elastic element (50) is arranged on the bolt (56), for example in the form of an elastic sheath.

12. A wind turbine,
comprising a main bearing unit (10) according to any one of the preceding claims.

13. The main wind turbine according to claim 12,
comprising the rotor shaft (28) coupled to the main bearing unit (10) and a gear unit coupled or couplable to the output shaft (35),
wherein the coupling arrangement (32) of the main bearing unit (10) is designed to couple the rotor shaft (28) and the transmission unit by means of the output shaft (35) in a torque-transmitting manner.

## Revendications

1. Unité de roulement principal (10) pour supporter l'arbre de rotor (28) d'une éolienne,
complet:
- un roulement (11) ayant au moins une bague intérieure (14), au moins une bague extérieure (12) et un ensemble d'éléments roulants reçu entre les bagues extérieure et intérieure (12, 14);
- un dispositif d'accouplement (32) qui est conçu pour accoupler l'arbre de rotor (28) au moins indirectement et de manière à transmettre le couple à un arbre de sortie (35) de l'éolienne;
dans lequel l'arbre de rotor (28) est couplé de manière à transmettre un couple à l'une de la bague extérieure (12) et de la bague intérieure (14); et
dans lequel le dispositif d'accouplement (32) est couplé par transmission de couple à la même bague extérieure (12) ou bague intérieure (14) que l'arbre de rotor (28), caractérisé en ce
quel dispositif d'accouplement (32) est directement couplé à la bague extérieure (12) ou la bague intérieure (14) ou intégré en la bague extérieure (12) ou la bague intérieure (14).

2. Unité de roulement principal (10) selon la revendication 1,
dans lequel l'arbre de rotor (28) est couplé à la bague intérieure (14).

3. Unité de roulement principal (10) selon l'une quelconque des revendications précédentes,
dans lequel le dispositif d'accouplement (32) est adapté pour compenser au moins partiellement un décalage entre l'arbre de rotor (28) et/ou l'unité de roulement principal (10) et l'arbre de sortie (35) couplé à le dispositif d'accouplement (32).

4. Unité de roulement principale (10) selon la revendication 3,
dans lequel le dispositif d'accouplement (32) comprend au moins un élément élastique (50) pour compenser le désalignement.

5. Unité de roulement principal (10) selon l'une quelconque des revendications précédentes,
dans lequel le dispositif d'accouplement (32) comprend un premier élément d'embrayage (34) couplé à l'un correspondant de la bague extérieure (12) et de la bague intérieure (14), et un second élément d'embrayage (36) couplé au moins indirectement à l'arbre de sortie (35).

6. Unité de roulement principale (10) selon les revendications 4 et 5,
dans lequel une transmission de couple entre le premier et le second éléments d'embrayage (34, 36) a lieu au moins partiellement par l'intermédiaire de l'élément élastique (50).

7. Unité de roulement principal (10) selon la revendication 5 ou 6,
dans lequel les premier et second éléments d'embrayage (34, 36) comprennent chacun une denture (38, 40) et dans lequel les dentures (38, 40) des éléments d'embrayage (34, 36) interagissent les unes avec les autres de manière à transmettre un couple.

8. Unité de roulement principale (10) selon la revendication 7,
dans lequel la denture (40) du second élément d'accouplement (36) est conçue comme une denture incurvée.

9. Unité de roulement principal (10) selon la revendication 6 et l'une quelconque des revendications 7 ou 8,
dans lequel l'élément élastique (50) est au moins partiellement disposé entre les dents (38, 40).

10. Unité de roulement principale (10) selon la revendication 5,
dans lequel les premier et second éléments d'embrayage (34, 36) sont couplés l'un à l'autre par l'intermédiaire d'au moins une broche (56) de manière à transmettre un couple.

11. Unité de roulement principale (10) selon les revendications 6 et 10,
dans lequel l'élément élastique (50) est disposé sur le boulon (56), par exemple sous la forme d'une gaine élastique.

12. Une éolienne,
comprenant une unité de roulement principal (10) selon l'une quelconque des revendications précédentes.

13. La éolienne selon la revendication 12,
comprenant l'arbre de rotor (28) couplé à l'unité de palier principal (10) et une unité d'engrenage couplée ou pouvant être couplée à l'arbre de sortie (35),
dans lequel le dispositif d'accouplement (32) de l'unité de palier principal (10) est conçu pour coupler l'arbre de rotor (28) et l'unité de transmission au moyen de l'arbre de sortie (35) de manière à transmettre le couple.
